# EUROPÄISCHE PATENTANMELDUNG

(11) **EP 4 796 197 A1**
(43) Veröffentlichungstag der Anmeldung: **26.08.2026**
(21) Anmeldenummer: 26156337.3
(22) Anmeldetag: 04.02.2026
(51) Int. Cl.: B01D 29/01, B01D 29/03, B01D 29/44, B01D 29/64

(54) **SIEBVORRICHTUNG, SIEBELEMENT SOWIE VERFAHREN ZUR HERSTELLUNG EINER SIEBVORRICHTUNG**

(30) Priorität: 21.02.2025 DE 102025106661
(71) Anmelder: Huber SE, 92334 Berching (DE)
(72) Erfinder: Romano, Sven, 92334 Berching (DE); Stiegler, Reinhard, 92334 Berching (DE)
(74) Vertreter: Canzler & Bergmeier Patentanwälte Partnerschaft mbB

(57) **Zusammenfassung**

Die vorliegende Erfindung betrifft eine Siebvorrichtung (1) zum Abscheiden von Siebgut aus einer mit Siebgut verunreinigten strömenden Flüssigkeit, beispielsweise Abwasser, mit einem Gestell (2) und einem an dem Gestell (2) fixierten Siebrost (3) mit einer Vielzahl von Siebelementen (4). Außerdem betrifft die Erfindung ein Siebelement (4) für eine Siebvorrichtung (1) sowie ein Verfahren zur Herstellung einer Siebvorrichtung (1). Für die Siebvorrichtung (1) wird vorgeschlagen, dass der Siebrost (3) und die Siebelemente (4) zumindest abschnittsweise gekrümmt, insbesondere kreisbogenförmig, ausgebildet sind, und dass die Siebelemente (4) mehrere Formschlusselemente (5) aufweisen, mit denen sie über mehrere Befestigungsvorrichtungen (6) der Siebvorrichtung (1) an dem Gestell (2) befestigt sind.

## Beschreibung

Die vorliegende Erfindung betrifft eine Siebvorrichtung zum Abscheiden von Siebgut aus einer mit Siebgut verunreinigten strömenden Flüssigkeit, beispielsweise Abwasser, mit einem Gestell und einem an dem Gestell fixierten Siebrost mit einer Vielzahl von Siebelementen. Außerdem betrifft die Erfindung ein Siebelement für eine Siebvorrichtung sowie ein Verfahren zur Herstellung einer Siebvorrichtung.

Gattungsgemäße Siebvorrichtungen werden beispielsweise dazu verwendet, grobe Verunreinigungen, insbesondere aus kommunalen Abwässern, zu entfernen. Diese Verunreinigungen können beispielsweise Gegenstände, Papier und Pflanzenreste umfassen. Hierzu wird die verunreinigte Flüssigkeit auf ein Siebrost geleitet, das die groben Verunreinigungen zurückhält. Die derart vorgereinigte Flüssigkeit kann dann beispielsweise weiteren Reinigungsmaßnahmen unterzogen werden. Die vom Siebrost zurückgehaltenen Verunreinigungen können beispielsweise durch einen entsprechenden Mechanismus entfernt und separat entsorgt werden. Eine derartige Vorrichtung ist beispielsweise in der DE 10 2015 108 006 A1 offenbart.

Üblicherweise bestehen die Siebroste von bekannten Siebvorrichtungen aus einer Vielzahl von Siebelementen, die einerseits an sich entsprechend stabil aufgeführt sein müssen, um bei Kollisionen mit Verunreinigungen nicht beschädigt zu werden und andererseits stabil mit einem Gestell der Siebvorrichtungen verbunden sein müssen, um sich bei Kollisionen nicht zu lösen. Hierbei sind die bekannten Siebelemente mit dem Gestell einzeln verschweißt, was die Herstellung des Siebrosts aufwendig macht. Zusätzlich wird durch die Schweißverbindung eine Wartung eines eventuell beschädigten Siebrosts deutlich erschwert.

Aufgabe der vorliegenden Erfindung ist es daher, bekannte Siebvorrichtungen sowie Siebelemente und Herstellungsverfahren für Siebvorrichtungen hinsichtlich der genannten Nachteile zu verbessern.

Die Aufgabe wird gelöst durch eine Siebvorrichtung, ein Siebelement und ein Verfahren zur Herstellung einer Siebvorrichtung mit den Merkmalen der unabhängigen Patentansprüche. Vorteilhafte Ausführungsformen sind Gegenstand der entsprechenden Abhängigen Patentansprüche.

Die erfindungsgemäße Siebvorrichtung eignet sich zum Abscheiden von Siebgut aus einer mit Siebgut verunreinigten strömenden Flüssigkeit, beispielsweise Abwasser. Die Siebvorrichtung umfasst ein Gestell und einen an dem Gestell fixierten Siebrost mit einer Vielzahl von Siebelementen. Erfindungsgemäß wird vorgeschlagen, dass der Siebrost und die Siebelemente zumindest abschnittsweise gekrümmt, insbesondere kreisbogenförmig, ausgebildet sind, und dass die Siebelemente mehrere Formschlusselemente aufweisen, mit denen sie über mehrere Befestigungsvorrichtungen der Siebvorrichtung an dem Gestell befestigt sind.

Der vorgeschlagene gekrümmte Aufbau des Siebrosts und der Siebelemente ermöglicht beispielsweise ein gezieltes Sammeln der Verunreinigungen in einem bestimmten Bereich des Siebrosts. Außerdem kann der Abtransport beispielsweise durch einen die Krümmung entlanglaufenden Mechanismus erfolgen. Hierdurch wird die Reinigungsleistung der Siebvorrichtung erhöht und die Wahrscheinlichkeit eines Verstopfens des Siebrosts verringert. Die Siebelemente können beispielsweise flächig ausgebildet sein, wobei eine Dicke der Siebelemente insbesondere wesentlich geringer als eine Höhe und Breite ist. Im bestimmungsgemäßen Betrieb sind die Flächen der Siebelemente insbesondere parallel zum Flüssigkeitsstrom ausgerichtet. Dies verleiht den Siebelementen eine hohe Stabilität gegenüber Kollisionen mit Verunreinigungen und vermeidet Turbulenzen im Flüssigkeitsstrom. Der gekrümmte Verlauf der Siebelemente ist insbesondere parallel zur Fläche der Siebelemente ausgebildet. Eine Ablenkung des Flüssigkeitsstroms findet durch die Krümmung vorzugsweise nicht statt. Die Krümmung kann beispielsweise einen konstanten Radius aufweisen oder abschnittsweise unterschiedliche Krümmungsradien besitzen. Bei einer kreisbogenförmigen Krümmung besitzt die Krümmung vorzugsweise einen im Wesentlichen konstanten Krümmungsradius.

Durch die Verwendung von Formschlusselementen und Befestigungsvorrichtungen anstelle von Schweißverbindungen wird die Montage der Siebelemente vereinfacht. Insbesondere sind die Siebelemente lösbar mit den Befestigungsvorrichtungen verbunden, so dass eine Wartung und ein Austausch einzelner Siebelemente oder Gruppen von Siebelementen ermöglicht wird, ohne den gesamten Siebrost ersetzen zu müssen. Die Siebelemente, die Befestigungsvorrichtungen und/oder das Gestell sind vorzugsweise aus Edelstahl hergestellt.

Die Formschlusselemente können beispielsweise als Laschen, Haken, Zapfen und/oder Führungsschienen ausgeführt sein, die mit entsprechend ausgeformten Aufnahmen der Befestigungsvorrichtungen zusammenwirken. Die Befestigungsvorrichtungen sind vorzugsweise zumindest teilweise fest mit dem Gestell verbunden, insbesondere verschweißt. Zusätzlich zu einer formschlüssigen Verbindung zwischen den Siebelementen und den Befestigungsvorrichtungen ist eine kraftschlüssige Verbindung insbesondere durch ein Verklemmen denkbar.

Die Siebvorrichtung kann allgemein ausgebildet sein, den Flüssigkeitsstrom abzulenken, womit beispielsweise ein sanfteres Zurückhalten der Verunreinigungen ermöglicht wird. Beispielsweise kann die Strömungsrichtung des Flüssigkeitsstroms im Bereich der Siebvorrichtung um einen Winkel von im Wesentlichen 90° abgelenkt werden. Die Siebelemente sind dann beispielsweise senkrecht zum ursprünglichen Flüssigkeitsstrom ausgerichtet. Hierzu kann die Siebvorrichtung beispielsweise ein Prallblech für den Flüssigkeitsstrom umfassen. Es ist denkbar, dass das erste und/oder das letzte Siebelement des Siebrosts verstärkt, beispielsweise mit einer im Vergleich zu den anderen Siebelementen vergrößerten Dicke, ausgebildet sind. Hierdurch können diese Siebelemente Lastspitzen, die sich in diesen Bereichen ergeben, widerstehen. Außerdem kann es vorteilhaft sein, einen Spalt zwischen dem Siebrost und dem Gestell mit geeigneten Mitteln zu verschließen, so dass eine Ansammlung von Siebgut zwischen dem Siebrost und dem Gestell vermieden wird.

Es ist vorteilhaft, wenn die Siebvorrichtung zumindest eine Reinigungsharke, insbesondere eine Vielzahl von Reinigungsharken, zum Abtransport des Siebguts umfasst, die insbesondere mithilfe wenigstens eines Antriebselements entlang des Siebrosts bewegbar sind. Hierdurch wird ein kontinuierlicher und automatisierter Abtransport des zurückgehaltenen Siebguts von der Oberfläche des Siebrosts ermöglicht. Die Krümmung des Siebrosts unterstützt dabei den Transportvorgang, da ein Abtransport des Siebguts zusätzlich durch die Schwerkraft begünstigt werden kann. Insbesondere greifen die Reinigungsharken in die Siebelemente ein, um auch dort festgesetztes Siebgut abzutransportieren.

Das wenigstens eine Antriebselement kann beispielsweise als Förderkette oder Rollenkette mit einzelnen Rollen, die sich beispielsweise entlang einer Führung der Siebvorrichtung bewegen, ausgebildet sein. Das Antriebselement ist insbesondere als endloses Antriebselement ausgebildet, das beispielsweise über entsprechende Umlenkvorrichtungen, insbesondere Umlenkrollen, geführt ist. Die Reinigungsharken sind vorzugsweise an dem Antriebselement befestigt. Das Antriebselement kann beispielsweise mithilfe eines Elektromotors angetrieben sein.

Die Bewegung der Reinigungsharken kann beispielsweise kontinuierlich oder periodisch erfolgen, wobei die Bewegungsgeschwindigkeit insbesondere an die anfallende Siebgutmenge anpassbar ist. Die Reinigungsharken können als kammartige Strukturen ausgebildet sein, deren Zinken wie bereits beschrieben in die Siebelemente eingreifen. Der Abstand ist dabei so gewählt, dass eine zuverlässige Erfassung des Siebguts gewährleistet ist, ohne die Siebelemente mechanisch zu belasten.

Die Siebvorrichtung kann beispielsweise einen oder mehrere Abstreifer umfassen, die das erfasste Siebgut an einer definierten Position, beispielsweise an einem Auswurf der Siebvorrichtung, in einen Sammelbehälter oder auf ein Förderband abgeben.

Besonders vorteilhaft ist es, wenn die Siebelemente mehr als zwei, bevorzugt wenigstens vier, Formschlusselemente aufweisen und die Siebvorrichtung mehr als zwei Befestigungsvorrichtungen, bevorzugt wenigstens vier, Befestigungsvorrichtungen umfasst. Die Verwendung von mehr als zwei Formschlusselementen pro Siebelement in Verbindung mit einer entsprechenden Anzahl von Befestigungsvorrichtungen gewährleistet eine besonders stabile und gleichmäßige Fixierung der Siebelemente am Gestell. Durch diese Mehrfachbefestigung werden die während des Betriebs auftretenden mechanischen Belastungen gleichmäßig auf mehrere Befestigungspunkte verteilt. Dies verhindert ein Verkanten oder Verformen der Siebelemente auch bei hoher Siebgutbelastung oder starker Strömung der zu reinigenden Flüssigkeit. Die Formschlusselemente können dabei beispielsweise symmetrisch über die Länge des Siebelements verteilt sein, wodurch eine ausgewogene Lastverteilung erreicht wird.

Eine Ausführung mit vier oder mehr Befestigungspunkten bietet zusätzlich den Vorteil, dass bei Wartungsarbeiten einzelne Befestigungspunkte gelöst werden können, ohne dass die Position des Siebelements verloren geht, da die verbleibenden Befestigungspunkte eine ausreichende Fixierung gewährleisten. Insbesondere können die Siebelemente sechs Befestigungsvorrichtungen und die Siebvorrichtung sechs Befestigungsvorrichtungen umfassen.

Ebenso ist es vorteilhaft, wenn die Befestigungsvorrichtungen auf einer der im bestimmungsgemäßen Betrieb der Siebvorrichtung zuströmenden Flüssigkeit abgewandten Seite des Siebrosts Stützpunkte für die Siebelemente bilden. Die Anordnung der Befestigungsvorrichtungen auf der strömungsabgewandten Seite des Siebrosts schafft eine definierte Auflage für die Siebelemente, wodurch diese gegen die Strömungskraft der zu reinigenden Flüssigkeit abgestützt werden.

Die strömungsabgewandte Anordnung der Befestigungsvorrichtungen schützt diese zudem vor direkter Exposition gegenüber dem Siebgut, wodurch ein Verschleiß der Befestigungsvorrichtungen reduziert wird. Die Zugänglichkeit der Befestigungsvorrichtungen für Wartungs- und Inspektionsarbeiten wird durch diese Anordnung ebenfalls verbessert.

Des Weiteren ist es vorteilhaft, wenn die Befestigungsvorrichtungen ein vorzugsweise statisches Aufnahmeelement und ein vorzugsweise lösbares Klemmelement umfassen. Das Zusammenwirken von statischem Aufnahmeelement und lösbarem Klemmelement ermöglicht eine sichere und zugleich wartungsfreundliche Befestigung der Siebelemente. Das statische Aufnahmeelement dient dabei insbesondere als unveränderliche Referenzposition für die exakte Ausrichtung des Siebelements, während das lösbare Klemmelement die eigentliche Fixierung bewirkt.

Das Aufnahmeelement kann insbesondere so geformt sein, dass es eine Vorpositionierung der Siebelemente ermöglicht und damit die Montage vereinfacht. Das Aufnahmeelement und das Klemmelement können beispielsweise zueinander formschlüssig ausgebildet sein. Das Klemmelement kann insbesondere als Klemmblech ausgebildet sein. Es ist denkbar, dass mehrere Klemmelemente für jedes Aufnahmeelement vorgesehen sind, um eine gruppenweise Wartung der Siebelemente zu ermöglichen.

Die Kombination aus statischem Aufnahmeelement und lösbarem Klemmelement kann zudem beispielswiese eine gewisse Relativbewegung zwischen Siebelement und Gestell erlauben, beispielsweise zur Kompensation von thermischen Längenänderungen oder zur Aufnahme von Fertigungstoleranzen. Die Klemmverbindung kann dabei so ausgelegt sein, dass sie diese Bewegungen in definierten Grenzen zulässt, ohne dass die sichere Fixierung beeinträchtigt wird.

Besondere Vorteile bringt es mit sich, wenn das Aufnahmeelement wenigstens eine Bohrung, insbesondere eine Gewindebohrung, umfasst. Die Bohrung bildet dabei beispielsweise eine standardisierte Schnittstelle zur Aufnahme verschiedener Arten von Befestigungselementen. Eine Gewindebohrung ermöglicht beispielsweise eine präzise und kontrollierte Einstellung der Klemmkraft durch ein entsprechendes Gewindeelement. Das Aufnahmeelement kann mehrere Bohrungen aufweisen, die eine Verteilung der Klemmkraft oder eine redundante Befestigung des Klemmelements ermöglichen.

Ebenso bringt es Vorteile mit sich, wenn das Klemmelement wenigstens eine Durchführung, insbesondere für eine Schraube, umfasst. Die Durchführung ermöglicht eine Verbindung zwischen Klemmelement und Aufnahmeelement, beispielsweise über beliebige Befestigungselemente. Insbesondere eine Schraubverbindung zwischen Klemmelement und Aufnahmeelement bildet eine standardisierte und wartungsfreundliche lösbare Verbindung. Auch kann die Klemmkraft durch das beim Einschrauben verwendete Drehmoment in gewissen Grenzen angepasst werden. Die Durchführung kann beispielsweise derart ausgebildet sein, dass der Schraubenkopf einer Schraube formschlüssig aufliegt. Hierzu umfasst die Durchführung beispielsweise eine Bohrung, insbesondere eine Senkbohrung. Die Auflagefläche um die Durchführung kann insbesondere als plane oder strukturierte Fläche ausgeführt sein, um die Klemmkraft optimal zu verteilen.

Mehrere Durchführungen können vorgesehen sein, um die Klemmkraft gleichmäßig zu verteilen oder um eine redundante Befestigung zu ermöglichen. Die Kombination von Durchführung und Schraube gestattet eine kontrollierte Demontage des Klemmelements, wobei die Schraube als Führung dienen kann und ein unbeabsichtigtes Herabfallen des Klemmelements verhindert. Die Durchführung kann zusätzlich so gestaltet sein, dass sie eine Verdrehsicherung für das Klemmelement bildet, beispielsweise durch eine nichtrunde Form oder zusätzliche Führungselemente.

Besondere Vorteile bringt es mit sich, wenn das Aufnahmeelement eine Kammstruktur aufweist. Durch die Kammstruktur werden beispielsweise definierte Aufnahmestrukturen für die Formschlusselemente der Siebelemente geschaffen, die die Siebelemente in einer Richtung stabilisieren. Die Kammstruktur ermöglicht zudem eine eindeutige Positionierung mehrerer nebeneinander liegender Siebelemente und gewährleistet deren präzise Ausrichtung zueinander. Die Kammstruktur kann dabei durch parallel angeordnete Stege gebildet sein, die Führungsnuten oder Aufnahmetaschen begrenzen. Die Zwischenräume der Kammstruktur sind vorzugsweise so bemessen, dass sie ein einfaches Einführen der Formschlusselemente ermöglichen.

Die Kammstruktur kann als integraler Bestandteil des Aufnahmeelements oder als separate, austauschbare Komponente ausgeführt werden. Die Geometrie der Kammstruktur ist vorzugsweise so gewählt, dass sich keine Bereiche bilden, in denen sich Verschmutzungen ansammeln können.

Auch ist es von Vorteil, wenn das Klemmelement eine Vielzahl von Öffnungen für die Formschlusselemente umfasst. Die Öffnungen ermöglichen eine direkte Durchführung der Formschlusselemente und damit eine formschlüssige Fixierung der Siebelemente. Die Öffnungen im Klemmelement korrespondieren dabei vorzugsweise mit der Kammstruktur des Aufnahmeelements und bilden gemeinsam eine präzise Führung für die Formschlusselemente.

Die Öffnungen können als Durchbrüche ausgeführt sein, deren Form und Größe auf die Geometrie der Formschlusselemente abgestimmt ist. Die Anordnung der Öffnungen im Klemmelement entspricht hierbei insbesondere der Position der Formschlusselemente und ermöglicht eine spannungsfreie Montage. Die Öffnungen können dabei Übermaß aufweisen, um Fertigungstoleranzen auszugleichen und die Montage zu erleichtern.

Das erfindungsgemäße Siebelement eignet sich für eine Siebvorrichtung, insbesondere eine Siebvorrichtung gemäß der vorangegangenen Beschreibung, wobei die beschriebenen Merkmale einzeln oder in beliebiger Kombination verwirklicht sein können. Erfindungsgemäß zeichnet sich das Siebelement dadurch aus, dass es zumindest abschnittsweise gekrümmt, insbesondere kreisbogenförmig, ausgebildet ist und mehrere Formschlusselemente zur Befestigung an Befestigungsvorrichtungen der Siebvorrichtung aufweist.

Die gekrümmte, insbesondere kreisbogenförmige Ausbildung des Siebelements kann wie bereits beschrieben zu einer effizienten Sammlung und zum Abtransport des Siebguts beitragen. Die mehreren Formschlusselemente gewährleisten eine sichere und insbesondere lösbare Verbindung mit den Befestigungsvorrichtungen der Siebvorrichtung ohne die Notwendigkeit von Schweißverbindungen.

Die Krümmung kann mit einem konstanten Radius ausgeführt sein oder einen variablen Krümmungsverlauf aufweisen. Das Siebelement kann vorzugsweise aus einem korrosionsbeständigen Material gefertigt sein, beispielsweise aus rostfreiem Stahl.

Die Formschlusselemente können insbesondere als integrale Bestandteile des Siebelements ausgebildet sein. Die Formschlusselemente sind dabei so angeordnet, dass sie eine definierte Position des Siebelements in der Siebvorrichtung gewährleisten.

Vorteilhaft ist es zudem, wenn das Siebelement mehr als zwei, bevorzugt wenigstens vier, Formschlusselemente umfasst. Durch das Vorsehen von mehr als zwei Formschlusselementen wird eine besonders stabile und gleichmäßige Befestigung am Gestell der Siebvorrichtung gewährleistet. Durch die Verteilung der während des Betriebs auftretenden Kräfte auf mehrere Befestigungspunkte werden lokale Spannungsspitzen vermieden und die mechanische Belastung des Siebelements reduziert.

Die Formschlusselemente können symmetrisch über die Länge des Siebelements verteilt sein, wobei je nach Länge des Siebelementes beispielsweise vier oder sechs Formschlusselemente eine optimale Balance zwischen Stabilität und Montageaufwand bieten. Der Abstand zwischen den Formschlusselementen ist vorzugsweise so gewählt, dass eine gleichmäßige Lastverteilung gewährleistet ist. Die Formschlusselemente können beispielsweise als Laschen, Haken, Zapfen und/oder Führungsschienen ausgeführt sein.

Die Mehrfachbefestigung ermöglicht zudem eine präzise Ausrichtung des gekrümmten Siebelements, da die Position durch mehrere definierte Punkte festgelegt wird. Bei Wartungsarbeiten bietet die Mehrfachbefestigung den Vorteil, dass einzelne Befestigungspunkte gelöst werden können, während die übrigen Formschlusselemente das Siebelement weiterhin in Position halten.

Das erfindungsgemäße Verfahren zur Herstellung einer Siebvorrichtung, die insbesondere gemäß der vorangegangenen Beschreibung ausgebildet ist, wobei die beschriebenen Merkmale einzeln oder in beliebiger Kombination verwirklicht sein können, umfasst die Verfahrensschritte Bereitstellen eines Gestells mit mehreren Befestigungsvorrichtungen, Bereitstellen einer Vielzahl von zumindest abschnittsweise, insbesondere kreisbogenförmig, gekrümmten, Siebelementen mit jeweils mehreren Formschlusselementen, Einlegen der Vielzahl von Siebelementen in die Befestigungsvorrichtungen zur Herstellung eines Siebrosts und formschlüssiges Fixieren der Formschlusselemente an den Befestigungsvorrichtungen.

Das beschriebene Herstellungsverfahren ermöglicht eine effiziente und präzise Montage der Siebvorrichtung ohne die Notwendigkeit von Schweißarbeiten. Die Bereitstellung des Gestells mit den mehreren Befestigungsvorrichtungen bildet die Basis für die Montage. Die Befestigungsvorrichtungen können dabei bereits vorjustiert sein, um die spätere Ausrichtung der Siebelemente zu vereinfachen.

Die gekrümmten Siebelemente werden beispielsweise in einem separaten Fertigungsprozess hergestellt und mit den erforderlichen Formschlusselementen versehen. Die Siebelemente werden beispielsweise aus Blechen gestanzt oder geschnitten, wobei beim Schneiden ein Laser oder ein Wasserstrahl verwendet werden kann. Insbesondere können die Siebelemente aus mehreren Einzelteilen, beispielsweise durch Schweißen zusammengesetzt werden, was die Größe der notwendigen Stanz- oder Schneidmaschinen reduziert.

Das Einlegen der Siebelemente erfolgt vorzugsweise sequenziell, wobei jedes Siebelement zunächst lose in die entsprechenden Befestigungsvorrichtungen eingesetzt wird. Die Befestigungsvorrichtungen können dabei so gestaltet sein, dass sie eine Vorpositionierung der Siebelemente ermöglichen. Die Fixierung der Siebelemente kann beispielsweise und wie zuvor beschrieben durch Klemmen erfolgen. Dies kann beispielsweise durch das Anziehen von Klemmschrauben oder das Betätigen von Schnellspannmechanismen erfolgen.

Besonders vorteilhaft ist es, wenn das Fixieren der Formschlusselemente an den Befestigungsvorrichtungen ein Fixieren eines Klemmelements der Befestigungsvorrichtungen an einem Aufnahmeelement der Befestigungsvorrichtungen umfasst. Die Fixierung der Siebelemente mittels Klemmelement und Aufnahmeelement ermöglicht eine kontrollierte und präzise Montage bei gleichzeitig hoher Betriebssicherheit.

Das Aufnahmeelement bildet zunächst eine definierte Aufnahmeposition für das Siebelement, wobei die Formschlusselemente insbesondere in die vorgesehenen Aufnahmetaschen oder Führungsnuten eingelegt werden. Die Position des Siebelements wird dabei beispielsweise durch die Geometrie des Aufnahmeelements vorgegeben. Das Aufnahmeelement kann vorzugsweise so gestaltet sein, dass es eine Vorzentrierung des Siebelements ermöglicht.

Das Klemmelement wird anschließend insbesondere so positioniert, dass es die Formschlusselemente des Siebelements in entsprechenden Öffnungen aufnimmt. Die Klemmkraft kann dabei durch geeignete Verbindungselemente, beispielsweise Schrauben, stufenlos eingestellt werden. Die Fixierung kann insbesondere so erfolgen, dass zunächst eine lose Vorpositionierung möglich ist, bevor die endgültige Klemmkraft aufgebracht wird.

Vorteilhaft ist es zudem, wenn das Bereitstellen des Gestells mit den Befestigungsvorrichtungen ein Verschweißen oder Verschrauben des Gestells mit den Befestigungsvorrichtungen umfasst. Die permanente Verbindung zwischen Gestell und Befestigungsvorrichtungen durch Verschweißen oder Verschrauben schafft eine stabile Basis für die spätere Montage der Siebelemente. Die Schweißverbindung gewährleistet dabei eine dauerhafte und belastbare Integration der Befestigungsvorrichtungen in die Gestellstruktur. Eine Schraubverbindung bildet eine lösbare Verbindung, die eventuell eine spätere Wartung und Instandhaltung der Siebvorrichtung erleichtert. Die Befestigungsvorrichtungen können zur Stabilisierung des Gestells beitragen.

Die Schweißverbindungen können als durchgehende oder unterbrochene Nähte oder als Punktschweißungen ausgeführt sein, wobei die Art der Schweißverbindung vorzugsweise an die zu erwartenden Betriebslasten angepasst ist. Nach dem Schweißvorgang kann eine mechanische Nachbearbeitung der Befestigungsvorrichtungen erfolgen, um die erforderliche Maßgenauigkeit für die spätere Montage der Siebelemente sicherzustellen. Die geschweißten Verbindungsstellen können mit einem Korrosionsschutz versehen werden, der die Langzeitbeständigkeit der Verbindung gewährleistet. Die Schweißverbindung zwischen Gestell und Befestigungsvorrichtungen bildet einen Teil der tragenden Struktur der Siebvorrichtung und überträgt die während des Betriebs auftretenden Kräfte in das Gestell.

Weitere Vorteile der Erfindung sind in den nachfolgenden Ausführungsbeispielen beschrieben. Es zeigen, jeweils schematisch:
- **Figur 1**: ein erstes Ausführungsbeispiel einer erfindungsgemäßen Siebvorrichtung in einer schematischen Frontansicht,
- **Figur 2**: ein erstes Ausführungsbeispiel eines erfindungsgemäßen Siebelements,
- **Figur 3**: ein zweites Ausführungsbeispiel des erfindungsgemäßen Siebelements,
- **Figur 4**: ein Gestell eines zweiten Ausführungsbeispiels der erfindungsgemäßen Siebvorrichtung,
- **Figur 5**: eine Befestigungsvorrichtung der erfindungsgemäßen Siebvorrichtung, und
- **Figur 6**: einen Verbindungsbereich von Siebelementen und Befestigungsvorrichtung in einer teilgeschnittenen isometrischen Ansicht.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

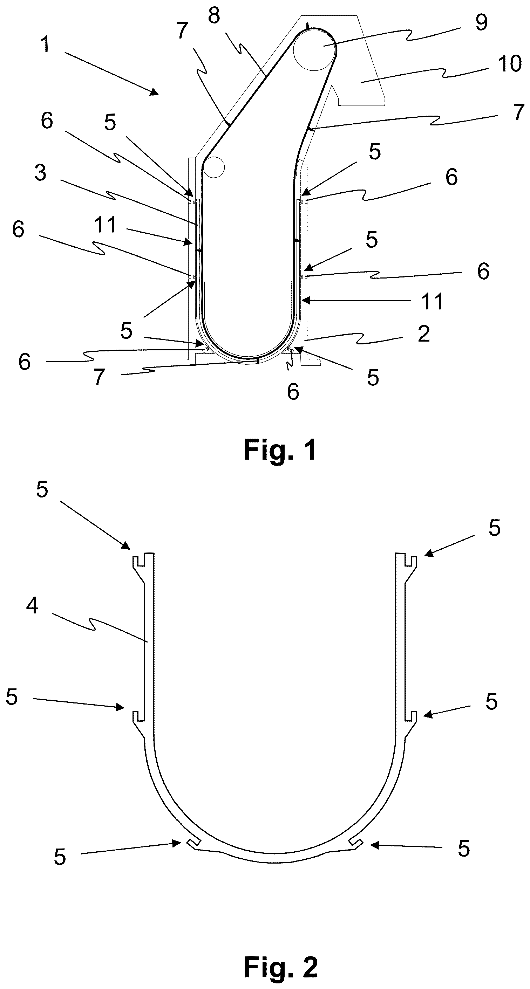

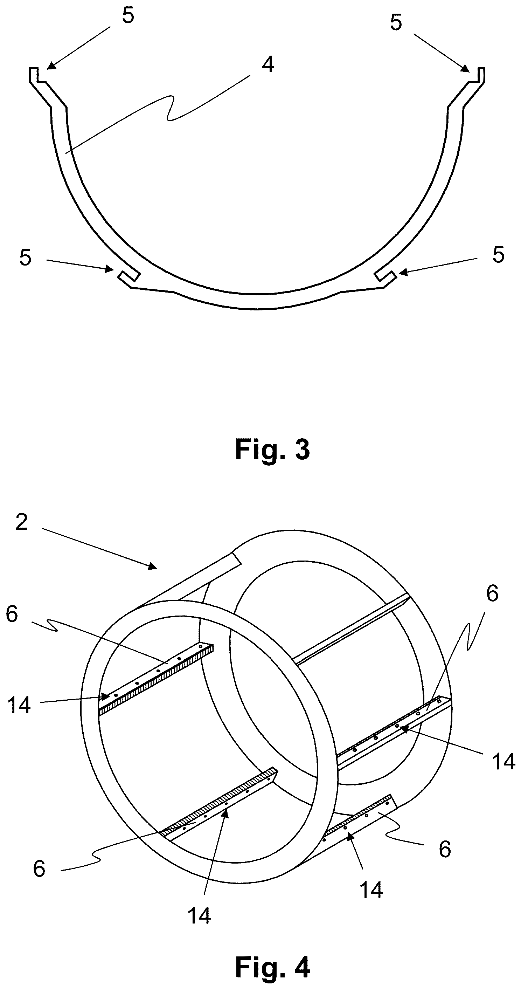

Figur 1 zeigt die Siebvorrichtung 1 zum Abscheiden von Siebgut aus einer mit Siebgut verunreinigten strömenden Flüssigkeit, beispielsweise Abwasser, in einer schematischen Frontansicht. Die Siebvorrichtung 1 umfasst ein Gestell 2, an dem ein kreisbogenförmig ausgebildeter Siebrost 3 fixiert ist. Der Siebrost 3 besteht aus einer Vielzahl von Siebelementen 4 (siehe insbesondere Figuren 2 und 3), die flächig ausgebildet sind, wobei eine Dicke der Siebelemente 4 wesentlich geringer als deren Höhe und Breite ist.

Die Siebelemente 4 sind mit mehreren Formschlusselementen 5 versehen, die über entsprechende Befestigungsvorrichtungen 6 am Gestell 2 befestigt sind. Die Formschlusselemente 5 sind dabei symmetrisch auf beiden Seiten 11 des gekrümmten Siebrosts 3 angeordnet, wodurch eine ausgewogene Lastverteilung erreicht wird. Die Verwendung von Formschlusselementen 5 und Befestigungsvorrichtungen 6 anstelle von Schweißverbindungen ermöglicht eine vereinfachte Montage sowie eine verbesserte Wartung und einen einfachen Austausch einzelner Siebelemente 4 oder Gruppen von Siebelementen 4.

Die dargestellte Siebvorrichtung 1 lenkt den Flüssigkeitsstrom, der in dieser Anordnung aus Richtung vor der Bildebene kommen würde, im Wesentlichen um 90° ab, wobei der Flüssigkeitsstrom dann beidseitig durch den Siebrost 3 geleitet wird. Die Flächen der Siebelemente 4 sind entsprechend parallel zum dortigen Flüssigkeitsstrom ausgerichtet, was den Siebelementen 4 eine hohe Stabilität gegenüber Kollisionen mit Verunreinigungen verleiht.

Zur kontinuierlichen Reinigung des Siebrosts 3 sind mehrere Reinigungsharken 7 vorgesehen, die mithilfe eines Antriebselements 8 entlang des Siebrosts 3 bewegbar sind. Das Antriebselement 8 ist als endloses Antriebselement 8 ausgebildet und wird über wenigstens eine Umlenkrolle 9 geführt. Das Antriebselement 8 kann beispielsweise durch einen nicht dargestellten Motor, der mit der Umlenkrolle im oberen Bereich der Siebvorrichtung 1 verbunden ist, angetrieben werden. Die Reinigungsharken 7 sind beispielsweise als kammartige Strukturen ausgebildet, deren Zinken in die Siebelemente 4 eingreifen, um auch dort festgesetztes Siebgut abzutransportieren.

Die kreisbogenförmige Ausbildung des Siebrosts 3 ermöglicht ein gezieltes Sammeln der Verunreinigungen im unteren Bereich der Siebvorrichtung 1 und unterstützt den Abtransport durch die Reinigungsharken 7, wobei die Krümmung den Transportvorgang zusätzlich durch die Schwerkraft begünstigt. Das erfasste Siebgut wird zu einem Auswurf 10 transportiert, wo es beispielsweise in einen nicht dargestellten Sammelbehälter abgegeben werden kann.

Die Befestigungsvorrichtungen 6 sind auf einer der im bestimmungsgemäßen Betrieb der Siebvorrichtung 1 zuströmenden Flüssigkeit abgewandten Seite 11 des Siebrosts 3 als Stützpunkte für die Siebelemente 4 angeordnet. Diese strömungsabgewandte Anordnung der Befestigungsvorrichtungen 6 schützt diese vor direkter Exposition gegenüber dem Siebgut, wodurch ein Verschleiß der Befestigungsvorrichtungen 6 reduziert und die Zugänglichkeit für Wartungs- und Inspektionsarbeiten verbessert wird.

Die mehrfache Anordnung der Formschlusselemente 5 mit den entsprechenden Befestigungsvorrichtungen 6 gewährleistet eine besonders stabile und gleichmäßige Fixierung der Siebelemente 4 am Gestell 2. Durch diese Mehrfachbefestigung werden die während des Betriebs auftretenden mechanischen Belastungen gleichmäßig auf mehrere Befestigungspunkte verteilt, was ein Verkanten oder Verformen der Siebelemente 4 auch bei hoher Siebgutbelastung oder starker Strömung der zu reinigenden Flüssigkeit verhindert.

Figur 2 zeigt ein erstes Ausführungsbeispiel eines erfindungsgemäßen Siebelements 4. Eine Vielzahl dieser Siebelemente 4 bildet beispielsweise den Siebrost 3 der Siebvorrichtung 1 aus Figur 1. Das Siebelement 4 ist U-förmig ausgebildet mit einer abschnittsweise kreisbogenförmigen Krümmung, wobei die Krümmung einen im Wesentlichen konstanten Radius aufweist. Das Siebelement 4 ist flächig ausgebildet, wobei eine Dicke des Siebelements 4 wesentlich geringer als dessen Höhe und Breite ist.

An dem Siebelement 4 sind mehrere Formschlusselemente 5 symmetrisch angeordnet, die zur lösbaren Befestigung an den Befestigungsvorrichtungen 6 der Siebvorrichtung 1 dienen. Die Formschlusselemente 5 sind dabei als integrale Bestandteile des Siebelements 4 ausgebildet und so angeordnet, dass sie eine definierte Position des Siebelements 4 in der Siebvorrichtung 1 gewährleisten.

Im dargestellten Ausführungsbeispiel weist das Siebelement 4 sechs Formschlusselemente 5 auf, die paarweise auf beiden Seiten des Siebelements 4 angeordnet sind. Diese Mehrfachbefestigung gewährleistet eine besonders stabile und gleichmäßige Befestigung am Gestell 2 der Siebvorrichtung 1. Durch die Verteilung der während des Betriebs auftretenden Kräfte auf sechs Befestigungspunkte werden lokale Spannungsspitzen vermieden und die mechanische Belastung des Siebelements 4 reduziert.

Die Formschlusselemente 5 sind als hakenförmige Strukturen ausgeführt, die mit beispielsweise entsprechend ausgeformten Aufnahmen der Befestigungsvorrichtungen 6 zusammenwirken. Diese Ausführung ermöglicht eine sichere und zugleich wartungsfreundliche Befestigung ohne die Notwendigkeit von Schweißverbindungen.

Der gekrümmte Verlauf des Siebelements 4 ist parallel zu dessen Fläche ausgebildet und unterstützt im eingebauten Zustand das gezielte Sammeln und den Abtransport von Siebgut. Das Siebelement 4 ist vorzugsweise aus einem korrosionsbeständigen Material, beispielsweise aus rostfreiem Stahl, gefertigt, um den Anforderungen im Dauerbetrieb mit verunreinigter Flüssigkeit gerecht zu werden.

Figur 3 zeigt ein alternatives Ausführungsbeispiel des erfindungsgemäßen Siebelements 4. Das Siebelement 4 ist hier ausschließlich kreisbogenförmig gekrümmt ausgebildet, wobei auch hier die Krümmung einen im Wesentlichen konstanten Radius aufweist.

Im Unterschied zum ersten Ausführungsbeispiel weist dieses Siebelement 4 vier Formschlusselemente 5 auf, die paarweise an den seitlichen Bereichen des gekrümmten Siebelements 4 angeordnet sind. Die Formschlusselemente 5 sind symmetrisch über die Länge des Siebelements 4 verteilt, wodurch eine ausgewogene Lastverteilung erreicht wird.

Die Formschlusselemente 5 sind auch bei diesem Ausführungsbeispiel als integrale Bestandteile des Siebelements 4 ausgebildet und weisen eine hakenförmige Struktur auf. Das Siebelement 4 ist auch in diesem Ausführungsbeispiel flächig ausgebildet, wobei die Dicke des Siebelements 4 wesentlich geringer als dessen Höhe und Breite ist.

Figur 4 zeigt ein Gestell 2 eines zweiten Ausführungsbeispiels der Siebvorrichtung 1 in perspektivischer Darstellung. Das Gestell 2 weist eine ringförmige Grundstruktur auf, an der mehrere Befestigungsvorrichtungen 6 angeordnet sind. Das Gestell 2 dient beispielsweise der Aufnahme einer Vielzahl von Siebelementen 4 aus dem Ausführungsbeispiel der Figur 3.

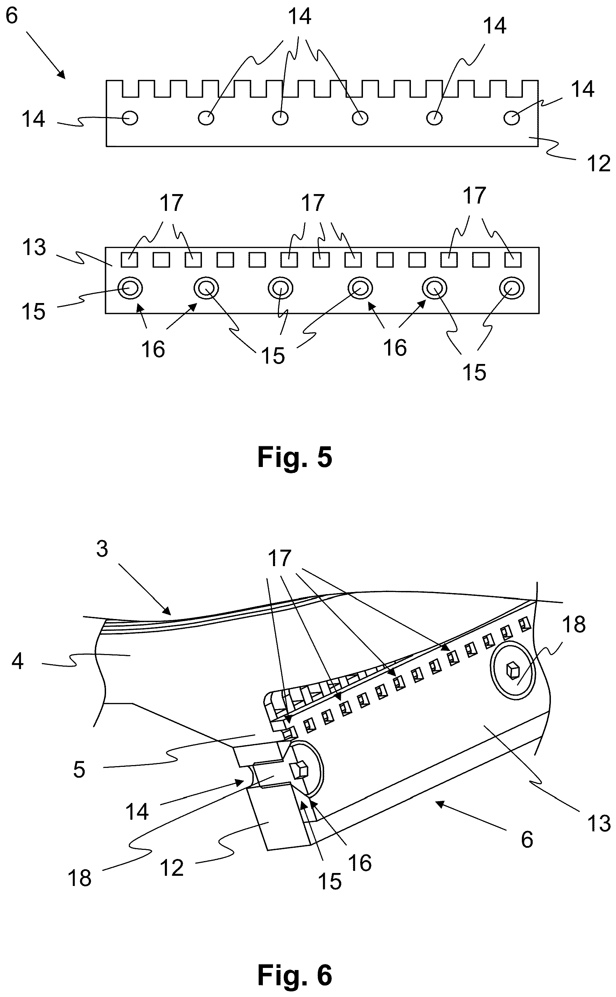

Die Befestigungsvorrichtungen 6 sind über einen unteren Bereich des Umfangs des Gestells 2 verteilt und weisen jeweils Bohrungen 14 auf, die hier beispielsweise als Gewindebohrungen ausgeführt sind. Die Gewindebohrungen bilden standardisierte Schnittstellen zur Aufnahme verschiedener Arten von Befestigungselementen. In einer zweiteiligen Ausführung der Befestigungsvorrichtungen 6 (siehe Figur 5) sind die dargestellten Elemente beispielsweise die Aufnahmeelemente 12 für die Siebelemente 4.

Die Befestigungsvorrichtungen 6 sind fest mit dem Gestell 2 verbunden, insbesondere verschweißt, wodurch eine stabile Basis für die spätere Montage der Siebelemente 4 geschaffen wird. Durch die permanente Verbindung zwischen Gestell 2 und Befestigungsvorrichtungen 6 mittels Schweißverbindung wird eine dauerhafte und belastbare Integration der Befestigungsvorrichtungen 6 in die Gestellstruktur gewährleistet.

Die ringförmige Ausführung des Gestells 2 korrespondiert mit der kreisbogenförmigen Ausbildung der Siebelemente 4 und unterstützt damit die effiziente Sammlung und den Abtransport des Siebguts im Betrieb. Die Befestigungsvorrichtungen 6 sind so angeordnet, dass sie eine präzise Ausrichtung der Siebelemente 4 ermöglichen und gleichzeitig für Wartungs- und Inspektionsarbeiten gut zugänglich sind.

Figur 5 zeigt eine detaillierte Darstellung einer Befestigungsvorrichtung 6 der Siebvorrichtung 1. Die Befestigungsvorrichtung 6 umfasst in diesem Beispiel ein Aufnahmeelement 12 und ein Klemmelement 13, die zusammen eine sichere und wartungsfreundliche Befestigung der Siebelemente 4 ermöglichen. Das Aufnahmeelement 12 weist beispielsweise eine Kammstruktur auf, die die Siebelemente 4 lateral fixiert und eine exakte Positionierung der Siebelemente 4 während der Montage der Siebvorrichtung 1 ermöglicht.

Das Klemmelement 13 ist mit mehreren Öffnungen 17 versehen, die eine direkte Einführung der Formschlusselemente 5 ermöglichen und damit eine formschlüssige Fixierung der Siebelemente 4 gewährleisten. Zur Verbindung des Klemmelements 13 mit dem Aufnahmeelement 12 sind mehrere Durchführungen 15 mit Senkbohrungen 16 vorgesehen. Diese Durchführungen 15 sind so ausgebildet, dass ein Schraubenkopf einer Schraube formschlüssig aufliegt.

Durch diese Konstruktion wird eine lösbare Verbindung zwischen den Siebelementen 4 und den Befestigungsvorrichtungen 6 ermöglicht, die eine einfache Wartung und einen Austausch einzelner Siebelemente 4 oder Gruppen von Siebelementen 4 gestattet, ohne den gesamten Siebrost ersetzen zu müssen.

Figur 6 zeigt in einer teilgeschnittenen isometrischen Ansicht einen Verbindungsbereich zwischen dem Siebrost 3 mit mehreren Siebelementen 4 und einer Befestigungsvorrichtung 6. Die Siebelemente 4 weisen jeweils Formschlusselemente 5 auf, die mit der Befestigungsvorrichtung 6 verbunden sind.

Die Befestigungsvorrichtung 6 umfasst ein Aufnahmeelement 12 und ein Klemmelement 13, die zusammen eine formschlüssige und lösbare Verbindung mit den Siebelementen 4 bilden. Hierbei sind die Formschlusselemente 5 in die Öffnungen 17 des Klemmelements 13 eingeführt. Das Aufnahmeelement 12 weist Bohrungen 14 auf, während das Klemmelement 13 mit entsprechenden Öffnungen 17 für die Durchführung von Schrauben 18 versehen ist. Die Verbindung zwischen Aufnahmeelement 12 und Klemmelement 13 wird durch Schrauben 18 hergestellt, deren Köpfe formschlüssig in den Senkbohrungen 16 des Klemmelements 13 aufliegen. Die Siebelemente 4 werden durch die Kammstruktur des Aufnahmeelements 12, die formschlüssige Verbindung zwischen den Formschlusselementen 5 und den Öffnungen 17 des Klemmelements 13 und die Schraubverbindung zwischen Aufnahmeelement 12 und Klemmelement 13 fixiert.

### Bezugszeichenliste

- 1: Siebvorrichtung
- 2: Gestell
- 3: Siebrost
- 4: Siebelement
- 5: Formschlusselement
- 6: Befestigungsvorrichtung
- 7: Reinigungsharke
- 8: Antriebselement
- 9: Umlenkrolle
- 10: Auswurf
- 11: Seite
- 12: Aufnahmeelement
- 13: Klemmelement
- 14: Bohrung
- 15: Durchführung
- 16: Senkbohrung
- 17: Öffnung
- 18: Schraube

## Patentansprüche

1. Siebvorrichtung (1) zum Abscheiden von Siebgut aus einer mit Siebgut verunreinigten strömenden Flüssigkeit, beispielsweise Abwasser, mit
einem Gestell (2) und
einem an dem Gestell (2) fixierten Siebrost (3) mit einer Vielzahl von Siebelementen (4),
**dadurch gekennzeichnet,**
**dass** der Siebrost (3) und die Siebelemente (4) zumindest abschnittsweise gekrümmt, insbesondere kreisbogenförmig, ausgebildet sind, und dass die Siebelemente (4) mehrere Formschlusselemente (5) aufweisen, mit denen sie über mehrere Befestigungsvorrichtungen (6) der Siebvorrichtung (1) an dem Gestell (2) befestigt sind.

2. Siebvorrichtung (1) nach dem vorherigen Anspruch, **dadurch gekennzeichnet, dass** die Siebvorrichtung (1) zumindest eine Reinigungsharke (7), insbesondere eine Vielzahl von Reinigungsharken (7), zum Abtransport des Siebguts umfasst, die insbesondere mithilfe wenigstens eines Antriebselements (8) entlang des Siebrosts (3) bewegbar sind.

3. Siebvorrichtung (1) nach einem der vorherigen Ansprüche, **dadurch gekennzeichnet, dass** die Siebelemente (4) mehr als zwei, bevorzugt wenigstens vier, Formschlusselemente (5) aufweisen und die Siebvorrichtung (1) mehr als zwei Befestigungsvorrichtungen (6), bevorzugt wenigstens vier, Befestigungsvorrichtungen (6) umfasst.

4. Siebvorrichtung (1) nach einem der vorherigen Ansprüche, **dadurch gekennzeichnet, dass** die Befestigungsvorrichtungen (6) auf einer der im bestimmungsgemäßen Betrieb der Siebvorrichtung (1) zuströmenden Flüssigkeit abgewandten Seite (11) des Siebrosts (3) Stützpunkte für die Siebelemente (4) bilden.

5. Siebvorrichtung (1) nach einem der vorherigen Ansprüche, **dadurch gekennzeichnet, dass** die Befestigungsvorrichtungen (6) ein vorzugsweise statisches Aufnahmeelement (12) und ein vorzugsweise lösbares Klemmelement (13) umfassen.

6. Siebvorrichtung (1) nach dem vorherigen Anspruch, **dadurch gekennzeichnet, dass** das Aufnahmeelement (12) wenigstens eine Bohrung (14), insbesondere eine Gewindebohrung, umfasst.

7. Siebvorrichtung (1) nach einem der Ansprüche 5 oder 6, **dadurch gekennzeichnet, dass** das Klemmelement (13) wenigstens eine Durchführung (15), insbesondere für eine Schraube (18), umfasst.

8. Siebvorrichtung (1) nach einem der Ansprüche 5 bis 7, **dadurch gekennzeichnet, dass** das Aufnahmeelement (12) eine Kammstruktur aufweist.

9. Siebvorrichtung (1) nach einem der Ansprüche 5 bis 8, **dadurch gekennzeichnet, dass** das Klemmelement (13) eine Vielzahl von Öffnungen (17) für die Formschlusselemente (5) umfasst.

10. Siebelement (4) für eine Siebvorrichtung (1), insbesondere nach einem der vorherigen Ansprüche, **dadurch gekennzeichnet, dass** das Siebelement (4) zumindest abschnittsweise gekrümmt, insbesondere kreisbogenförmig, ausgebildet ist und mehrere Formschlusselemente (5) zur Befestigung an Befestigungsvorrichtungen (6) der Siebvorrichtung (1) aufweist.

11. Siebelement (4) nach dem vorherigen Anspruch, **dadurch gekennzeichnet, dass** das Siebelement (4) mehr als zwei, bevorzugt wenigstens vier, Formschlusselemente (5) umfasst.

12. Verfahren zur Herstellung einer Siebvorrichtung (1), insbesondere gemäß einem der Ansprüche 1 bis 9, mit den Verfahrensschritten
- Bereitstellen eines Gestells (2) mit mehreren Befestigungsvorrichtungen (6),
- Bereitstellen einer Vielzahl von zumindest abschnittsweise, insbesondere kreisbogenförmig, gekrümmten, Siebelementen (4) mit jeweils mehreren Formschlusselementen (5),
- Einlegen der Vielzahl von Siebelementen (4) in die Befestigungsvorrichtungen (6) zur Herstellung eines Siebrosts (3), und
- formschlüssiges Fixieren der Formschlusselemente (5) an den Befestigungsvorrichtungen (6).

13. Verfahren nach dem vorherigen Anspruch, **dadurch gekennzeichnet, dass** das Fixieren der Formschlusselemente (5) an den Befestigungsvorrichtungen (6) ein Fixieren eines Klemmelements (13) der Befestigungsvorrichtungen (6) an einem Aufnahmeelement (12) der Befestigungsvorrichtungen (6) umfasst.

14. Verfahren nach einem der Ansprüche 12 oder 13, **dadurch gekennzeichnet, dass** das Bereitstellen des Gestells (2) mit den Befestigungsvorrichtungen (6) ein Verschweißen und/oder Verschrauben des Gestells (2) mit den Befestigungsvorrichtungen (6) umfasst.
